# EUROPÄISCHE PATENTSCHRIFT

(11) **EP 1 396 679 B1**
(45) Veröffentlichungstag und Bekanntmachung des Hinweises auf die Patenterteilung: **29.12.2010**
(21) Anmeldenummer: 03450160.1
(22) Anmeldetag: 02.07.2003
(51) Int. Cl.: F23K 3/02, B65G 53/24

(54) **Einrichtung und Verfahren zum Fördern von festen Brennstoffen, insbesondere Pellets**
Apparatus and method for the conveying of solid fuels, in particular pellets
Appareil et méthode pour le transport de combustible solide, en particulier des pellets

(30) Priorität: 06.09.2002 AT 13382002
(43) Veröffentlichungstag der Anmeldung: 10.03.2004
(73) Patentinhaber: Biotech Energietechnik GmbH, 5101 Bergheim bei Salzburg (AT)
(72) Erfinder: Winkler, Peter, 5112 Lamprechtshausen (AT)
(74) Vertreter: Sonn & Partner Patentanwälte

(56) Entgegenhaltungen:
- EP-A- 1 052 456
- WO-A-01/65181
- AT-B- 405 875
- US-A- 4 367 685

## Beschreibung

Die Erfindung betrifft eine Einrichtung zum Fördern von festen Brennstoffen, insbesondere Pellets, aus einem Vorratsbehälter über eine Förderleitung zu einer Brennkammer, wobei zwischen der Mündung der Förderleitung und der Brennkammer ein in einem die Mündung der Förderleitung umgebenden Anschlussstück angeordneter Verschluss, und weiters eine mit einer Steuerungseinheit verbundene Einrichtung zur Erzeugung eines Unterdrucks an der Mündung der Förderleitung vorgesehen ist.

Die Erfindung betrifft weiters ein Verfahren zum Fördern von festen Brennstoffen, insbesondere Pellets, aus einem Vorratsbehälter zu einer Brennkammer, wobei die Brennstoffe über eine Förderleitung angesaugt und danach in Richtung Brennkammer weitergeleitet werden.

Um Feststoffbrenner mit Brennstoffen zu versorgen, werden bestimmte Mengen an Brennstoffen, insbesondere Pellets, üblicherweise in zyklischen Abständen von einem Vorratsbehälter, der sich in gewissem Abstand vom Brenner befindet, zum Brenner befördert. Dabei kann die Förderung entweder unter Ausnutzung der Schwerkraft erfolgen oder unter Zuhilfenahme bestimmter Fördereinrichtungen. Dabei haben sich Saugleitungen, über die die Brennstoffe, insbesondere Pellets, aus dem Vorratsbehälter zur Brennkammer angesaugt werden, besonders bewährt. Zu diesem Zweck wird beispielsweise mit Hilfe einer Saugturbine an der Mündung der Förderleitung ein Unterdruck erzeugt, durch den die Pellets über die Saugleitung zu einem Zwischenbehälter befördert werden. Der Zwischenbehälter muss gegenüber der Umgebung luftdicht ausgeführt sein, um die Erzeugung eines Unterdrucks an der Mündung der Förderleitung zu ermöglichen. Meist ist der Zwischenbehälter durch eine Verschlussklappe abgedichtet, welche sich nach Erreichen einer bestimmten Brennstoffmenge automatisch öffnet, so dass die Brennstoffe in die Brennkammer fallen können. Die Förderung der Brennstoffe wird dabei meist manuell oder nach vorgegebenen Zeitspannen eingeleitet.

Eine Saugfördereinrichtung für feste Materialien, insbesondere zur Zuführung von festen Brennstoffen zu einer Feuerung, wird beispielsweise in der AT 405 875 B beschrieben.

Die AT 003 734 U1 betrifft eine Saugförderanlage für eine Heizanlage zur Entnahme von Brennstoffpellets aus einem Heizmateriallager, wobei mit Hilfe einer Saugturbine Heizmaterial mittels einer Saugleitung über zumindest eine Saugöffnung angesaugt wird und über einen Zyklonabscheider einem Heizkessel oder einem Zwischenlagerbehälter zugeführt wird. An den unteren Bereich des Zyklonabscheiders schließt ein Sammelbehälter an, welcher über eine Entleerungsklappe mit einem Zwischenlagerbehälter verbunden ist. Während des Betriebs der Saugturbine ist die Entleerungsklappe in Folge des innerhalb des Sammelbehälters auftretenden Unterdrucks geschlossen, so dass sich die Brennstoffpellets im Sammelbehälter sammeln. Bei Stillstand der Saugturbine wird die Entleerungsklappe durch das Gewicht der Brennstoffpellets geöffnet und der Inhalt in den Zwischenbehälter entleert.

Die EP 1 052 456 A1 beschreibt eine Saugförderanlage für eine Heizanlage zur Entnahme von Brennstoff-Pellets aus einem Lager über eine Saugleitung, wobei zur zuverlässigen Entnahme der Pellets eine Rückluftleitung an der Ausgangsseite der Saugturbine im Bereich der Saugöffnung in das Lager einmündet, wodurch eine Auflockerung der zu fördernden Pellets erreicht wird.

Die WO 01/65181 A1 beschreibt eine Pellets-Fördereinrichtung mit einer Sauglanze und einer Förderschnecke, die so angeordnet ist, dass die Pellets zur Ansaugöffnung der Sauglanze transportiert werden. Auf diese Weise ist praktisch ein vollständiger Pellets-Austrag aus dem Lager ohne Verlust von Lagerraum möglich.

Eine Aufgabe der vorliegenden Erfindung besteht in der Schaffung einer oben genannten Fördereinrichtung, welche ein automatisches Nachfüllen von Brennkammern mit festen Brennstoffen, insbesondere Pellets, ermöglicht und möglichst kostengünstig und einfach aufgebaut ist. Die Fördereinrichtung soll sich insbesondere für kleine Feststofföfen eignen, welche in privaten Haushalten Anwendung finden. Zudem soll die Fördereinrichtung möglichst klein ausgeführt sein, so dass die Einheit in Bestandteilen des Ofens, beispielsweise in einem Ofenrohr, untergebracht werden kann und somit möglichst wenig stört.

Eine weitere Aufgabe der Erfindung besteht in der Schaffung eines oben angegebenen Verfahrens zum Fördern von festen Brennstoffen, durch das eine wirkungsvolle automatische Nachfüllung einer Brennkammer mit festen Brennstoffen, insbesondere Pellets, gewährleistet wird.

Die erste erfindungsgemäße Aufgabe wird dadurch gelöst, dass der Verschluss mit einem Antrieb verbunden ist, und dass weiters ein Sensor zur Erfassung der zur Brennkammer weitergeleiteten Brennstoffmenge, insbesondere Pellets, vorgesehen ist, wobei der Antrieb und der Sensor mit der Steuerungseinheit verbunden ist. Durch die erfindungsgemäßen Merkmale wird eine automatische Förderung von festen Brennstoffen ermöglicht. Dabei wird der Verschluss, über den die angesaugten Brennstoffe in Richtung Brennkammer weitergeleitet werden können, angetrieben und die in Richtung der Brennkammer weitergeleiteten Brennstoffe mit Hilfe eines Sensors erfasst. Sofern in einem üblicherweise vor der Brennkammer noch angeordneten Zwischenbehälter unzureichend viele Brennstoffe enthalten sind, wird durch die Steuerungseinheit ein neuerlicher Förderzyklus eingeleitet und weitere Brennstoffe angesaugt und nach Öffnung des Verschlusses in Richtung Brennkammer weitergeleitet. Dieser Vorgang wird so oft wiederholt, bis die gewünschte Menge an Brennstoffen zur Brennkammer weitergeleitet werden. Dadurch kann jeweils die optimale Menge an Brennstoffen zur Brennkammer gefördert werden. Der konstruktive Aufwand ist dabei so gering, dass eine kostengünstige Herstellung der Fördereinrichtung möglich wird. Darüber hinaus können die Einheiten sehr klein ausgeführt werden, so dass ein Einsatz auch für kleine Öfen in privaten Wohnungen möglich ist.

Wenn der Verschluss, der Antrieb und der Sensor im Anschlussstück angeordnet sind, kann die Fördereinrichtung besonders klein und unscheinbar ausgeführt werden, so dass auch in Wohnbereichen eine Anwendung möglich wird.

Dabei weist das Anschlussstück vorzugsweise kreisförmigen Querschnitt auf und kann beispielsweise in Form eines Ofenrohres über einem Heizgerät angeordnet sein. Dies vermittelt den Eindruck eines Heizgeräts mit einem normalen Rauchrohrabgang in den Rauchfang. Das wirkliche Ofenrohr zum Ableiten der Rauchgase kann beispielsweise versteckt hinter dem Heizgerät zum Kamin verlaufend angeordnet werden.

Der Verschluss wird vorzugsweise durch eine Klappe gebildet, die sich innerhalb des Anschlussstückes befindet.

Um ein gezieltes Weiterleiten der Brennstoffe in Richtung Brennkammer zu ermöglichen, ist die Klappe vorzugsweise trichterförmig ausgebildet, oder ist über der Klappe ein Trichter angeordnet.

Um die Mündung der Förderleitung gegenüber der Umgebung möglichst luftdicht abdichten zu können, kann die Klappe mit einer Dichtung, vorzugsweise einer Gummidichtung, versehen werden. Dadurch kann mit minimalem Energieaufwand an der Mündung der Förderleitung ein Unterdruck erzeugt werden.

Der Antrieb zum Bewegen der Klappe wird vorzugsweise durch einen Motor und ein Hebegestänge gebildet. Dies ermöglicht eine platzsparende aber auch kostengünstige und robuste Realisierung.

Um eine möglichst flexible Steuerung der Förderung zu ermöglichen, ist die Steuerungseinheit vorzugsweise durch einen Mikroprozessor gebildet.

Der Sensor zur Erfassung der in die Brennkammer weitergeleiteten Brennstoffe kann durch einen kapazitiven Fühler, einen Ultraschallfühler, einen optischen Sensor oder einen induktiven Fühler gebildet sein.

Um eine Brennstoffförderung nur zu bestimmten Zeiten zu ermöglichen, kann eine Zeitschalteinheit mit der Steuerungseinheit oder einer Spannungsversorgungseinheit für die Steuerungseinheit verbunden sein.

Die Einrichtung zur Erzeugung eines Unterdrucks an der Mündung der Förderleitung kann durch eine Saugleitung und eine daran angeordnete Saugeinrichtung, vorzugsweise eine Saugturbinde, gebildet werden. Dabei wird die Saugleitung vorzugsweise ebenfalls innerhalb des Anschlussstückes angeordnet.

Um einen Transport der festen Brennstoffe im Vorratsbehälter in Richtung des anderen Endes der Saugleitung zu bewirken, kann im Vorratsbehälter eine Fördereinrichtung, vorzugsweise eine Förderschnecke, angeordnet sein, welche ebenfalls mit der Steuerungseinheit verbunden ist.

Die zweite erfindungsgemäße Aufgabe wird dadurch gelöst, dass die Menge der zur Brennkammer weitergeleiteten Brennstoffe mittels eines Sensors erfasst und die Förderung der Brennstoffe in Abhängigkeit der erfassten Brennstoffmenge geregelt wird. Dadurch wird gewährleistet, dass je Förderzyklus immer die optimale Menge an Brennstoffen zur Brennkammer gefördert wird.

Dabei kann in Abhängigkeit der erfassten Brennstoffmenge die Anzahl der einzelnen Förderschritte oder auch die Dauer der einzelnen Förderschritte geregelt werden.

Zur Erfüllung von Sicherheitsvorschriften kann vorgesehen sein, dass die Förderung der Brennstoffe nur bei abgebrannter Brennkammer erfolgt.

Nach erfolgter Brennstoffförderung wird die Brennkammer vorzugsweise automatisch gezündet, so dass automatisch ein quasi kontinuierlicher Brennvorgang ermöglicht wird.

Die vorliegende Erfindung wird an Hand der beigefügten Zeichnungen, welche ein Ausführungsbeispiel der Erfindung zeigen, näher erläutert. Dabei zeigen:
Fig. 1 das Schema einer zwischen einem Vorratsbehälter und einem Heizgerät angeordneten Fördereinrichtung;
Fig. 2 das Detail II aus Fig. 1 in vergrößerter und geschnittener Darstellung; und
Fig. 3 ein Schnittbild entlang der Schnittlinie III-III aus Fig. 2.

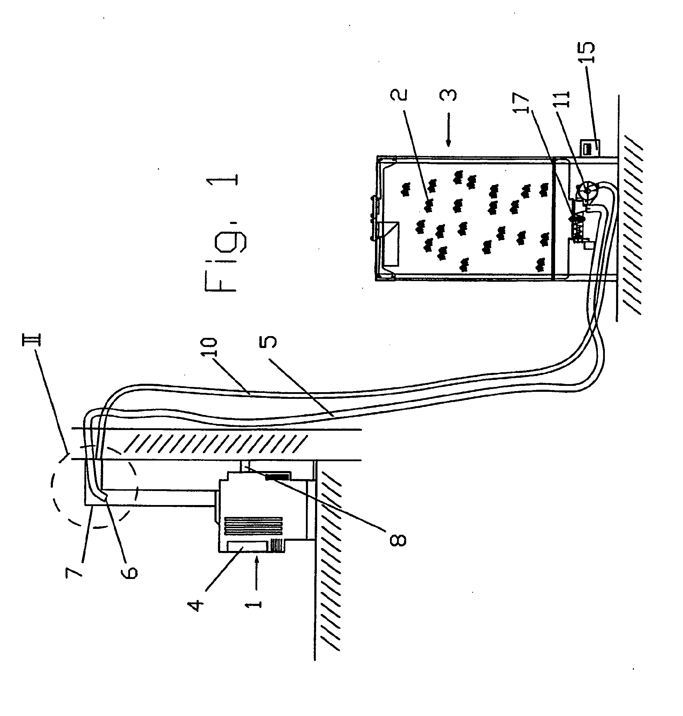

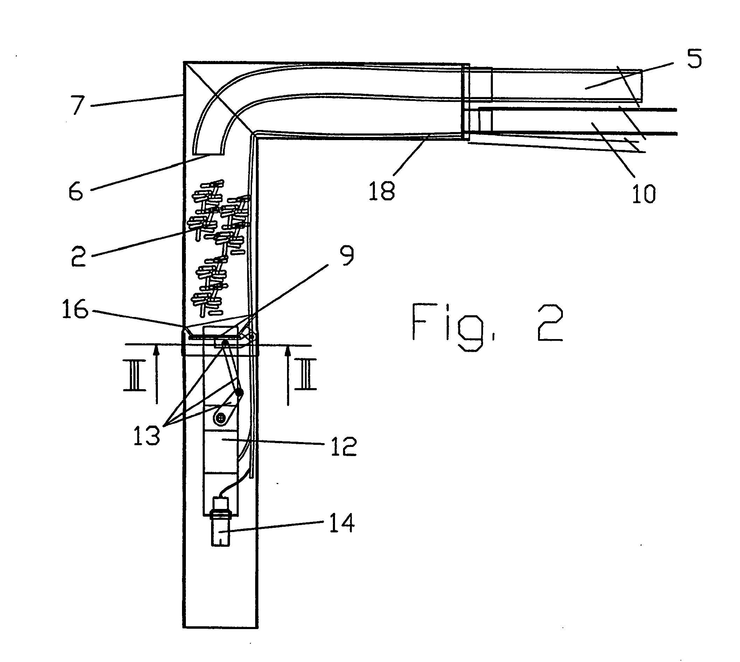

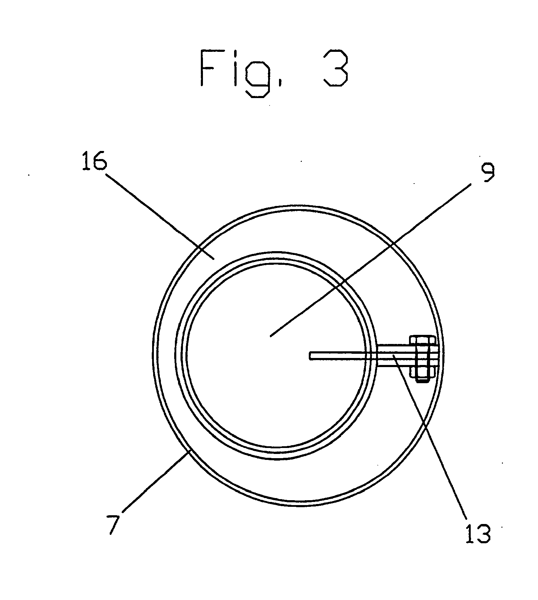

Fig. 1 zeigt ein Schema einer erfindungsgemäßen Einrichtung zum Fördern von festen Brennstoffen zu einem Heizgerät 1. Beim Heizgerät 1 handelt es sich beispielsweise um einen in einem Wohnbereich angeordneten Ofen. Die Brennstoffe, insbesondere Pellets 2, sind in einem vom Heizgerät 1 entfernten Vorratsbehälter 3 gelagert, der sich beispielsweise im Keller befindet. Die im Vorratsbehälter 3 gelagerten Pellets 2 werden mit Hilfe der erfindungsgemäßen Fördereinrichtung in Richtung Brennkammer 4 des Heizgeräts 1 gefördert. Üblicherweise befindet sich vor der Brennkammer 4 ein Zwischenbehälter od. dgl., von dem die Brennstoffe beispielsweise mittels einer Färderschnecke in die Brennkammer 4 transportiert werden (nicht dargestellt). Zu diesem Zweck befindet sich zwischen dem Vorratsbehälter 3 und dem Heizgerät 1 eine Förderleitung 5, dessen Mündung 6 in einem Anschlussstück 7 oberhalb des Heizgeräts 1 endet. Das Anschlussstück 7 ist im dargestellten Beispiel in Form eines Rohres angeordnet. Das echte Abgasrohr 8, über das die Abgase des Heizgeräts 1 in einen Kamin weitergeleitet werden, ist beispielsweise hinter dem Heizgerät 1 angeordnet. Wie aus Fig. 2 ersichtlich, ist im Anschlussstück 7 ein Verschluss 9, beispielsweise in Form einer Klappe angeordnet, durch den der Bereich der Mündung 6 der Förderleitung 5 gegenüber der Umgebung im Wesentlichen luftdicht abgeschlossen werden kann. Dadurch kann beispielsweise über eine Saugleitung 10 und eine daran angeschlossene Saugturbine 11 ein Unterdruck an der Mündung 6 der Förderleitung 5 erzeugt werden, wodurch die Pellets 2 aus dem Vorratsbehälter 3 über die Förderleitung 5 in das Anschlussstück 7 befördert werden, wo sich diese über der Klappe 9 sammeln. Die Menge der angesaugten Pellets 2 wird durch die Höhe des Unterdrucks und die Dauer der Erzeugung des Unterdrucks in Zusammenhang mit der Länge der Saugleitung 10 sowie der Größe und Beschaffenheit der Pellets 2 bestimmt. Nach einem Saugzyklus wird der Verschluss, beispielsweise die Klappe 9, geöffnet, wodurch die Pellets 2 in Richtung Brennkammer 4 bzw. in den davor angeordneten Zwischenbehälter weitergeleitet werden. Erfindungsgemäß ist der Verschluss, beispielsweise die Klappe 9, mit einem Antrieb verbunden, der durch einen Motor 12 und ein entsprechendes Hebelgestänge 13 gebildet sein kann. Darüber hinaus ist ein Sensor 14 unterhalb der Klappe 9 montiert, der die in Richtung Brennkammer weitergeleitete Bennstoffmenge erfasst. Der Sensor 14 sowie der Antrieb 12, 13 der Klappe 9 sind mit einer Steuerungseinheit 15 verbunden, welche sich beispielsweise im Vorratsbehälter 3 befindet. Die Steuerungseinheit 15 ist beispielsweise über ein Kabel 18 mit dem Sensor 14, dem Antrieb 12, 13 und der Saugturbine 11 verbunden, so dass der Ansaugvorgang in Abhängigkeit der vom Sensor 14 erfassten Brennstoffmenge geregelt werden kann. Um ein gezieltes Weiterleiten der Pellets 2 in Richtung Brennkammer 4 zu ermöglichen, kann die Klappe 9 trichterförmig ausgebildet sein, oder oberhalb der Klappe 9 ein Trichter 16 angeordnet sein. Zur Unterstützung der Förderung der Pellets 2 im Vorratsbehälter 3 zur Förderleitung 5 kann unterhalb des Vorratsbehälters 3 eine Fördereinrichtung beispielsweise in Form einer Förderschnecke 17 angeordnet sein. Die Bestandteile der erfindungsgemäßen Fördereinrichtung können kompakt unterhalb der Klappe 9 und somit in einfacher Weise am Ende des Anschlussstückes 7, welches in Form eines Rohres ausgebildet sein kann, angeordnet werden. Um ein möglichst ungestörtes Weiterleiten der Pellets 2 in Richtung Brennkammer 4 zu ermöglichen, ist der Trichter 9, wie in Fig. 3 gezeigt, außermittig angeordnet, und der Antrieb 12, 13 und der Sensor 14 im Bereich zwischen der Klappe 9 und dem Anschlussstück 7 angeordnet.

Die erfindungsgemäße Fördereinrichtung ermöglicht ein rasches, einfaches, automatisches Nachfüllen eines Heizgeräts 1 mit festen Brennstoffen, insbesondere Pellets 2.

## Patentansprüche

1. Einrichtung zum Fördern von festen Brennstoffen, insbesondere Pellets (2), aus einem Vorratsbehälter (3) über eine Förderleitung (5) zu einer Brennkammer (4), wobei zwischen der Mündung (6) der Förderleitung (5) und der Brennkammer (4) ein in einem die Mündung der Förderleitung (5) umgebenden Anschlussstück (7) angeordneter Verschluss (9), und weiters eine mit einer Steuerungseinheit (15) verbundene Einrichtung (10, 11) zur Erzeugung eines Unterdrucks an der Mündung (6) der Förderleitung (5) vorgesehen ist, **dadurch gekennzeichnet, dass** der Verschluss (9) mit einem Antrieb (12, 13) verbunden ist, und dass weiters ein Sensor (14) zur Erfassung der zur Brennkammer (4) weitergeleiteten Brennstoffmenge, insbesondere Pellets (2), vorgesehen ist, wobei der Antrieb (12, 13) und der Sensor (14) mit der Steuerungseinheit (15) verbunden ist.

2. Fördereinrichtung nach Anspruch 1, **dadurch gekennzeichnet, dass** der Verschluss (9), der Antrieb (12, 13) und der Sensor (14) im Anschlussstück angeordnet sind.

3. Fördereinrichtung nach Anspruch 1 oder 2, **dadurch gekennzeichnet, dass** das Anschlussstück (7) kreisförmigen Querschnitt aufweist.

4. Fördereinrichtung nach einem der Ansprüche 1 bis 3, **dadurch gekennzeichnet, dass** der Verschluss (9) durch eine Klappe gebildet ist.

5. Fördereinrichtung nach Anspruch 4, **dadurch gekennzeichnet, dass** die Klappe (9) trichterförmig ausgebildet oder über der Klappe (9) ein Trichter (16) angeordnet ist.

6. Fördereinrichtung nach Anspruch 4 oder 5, **dadurch gekennzeichnet, dass** die Klappe (9) mit einer Dichtung, vorzugsweise einer Gummidichtung, versehen ist.

7. Fördereinrichtung nach einem der Ansprüche 4 bis 6, **dadurch gekennzeichnet, dass** der Antrieb (12, 13) durch einen Motor (12) und einem Hebegestänge (13) gebildet ist.

8. Fördereinrichtung nach einem der Ansprüche 1 bis 7, **dadurch gekennzeichnet, dass** die Steuerungseinheit (15) durch einen Mikroprozessor gebildet ist.

9. Fördereinrichtung nach einem der Ansprüche 1 bis 8, **dadurch gekennzeichnet, dass** der Sensor (14) durch einen kapazitiven Fühler gebildet ist.

10. Fördereinrichtung nach einem der Ansprüche 1 bis 8, **dadurch gekennzeichnet, dass** der Sensor (14) durch einen Ultraschallfühler gebildet ist.

11. Fördereinrichtung nach einem der Ansprüche 1 bis 8, **dadurch gekennzeichnet, dass** der Sensor (14) durch einen optischen Sensor gebildet ist.

12. Fördereinrichtung nach einem der Ansprüche 1 bis 8, **dadurch gekennzeichnet, dass** der Sensor (14) durch einen induktiven Fühler gebildet ist.

13. Fördereinrichtung nach einem der Ansprüche 1 bis 12, **dadurch gekennzeichnet, dass** eine Zeitschalteinheit mit der Steuerungseinheit (15) oder einer Spannungsversorgungseinheit für die Steuerungseinheit (15) verbunden ist.

14. Fördereinrichtung nach einem der Ansprüche 1 bis 13, **dadurch gekennzeichnet, dass** die Einrichtung (10, 11) zur Erzeugung eines Unterdrucks an der Mündung (6) der Förderleitung (5) durch eine Saugleitung (10) und eine daran angeordnete Saugeinrichtung, vorzugsweise eine Saugturbine (11), gebildet ist.

15. Fördereinrichtung nach einem der Ansprüche 1 bis 14, **dadurch gekennzeichnet, dass** im Vorratsbehälter (3) eine Fördereinrichtung, vorzugsweise eine Förderschnecke (17) angeordnet ist, welche mit der Steuerungseinheit (15) verbunden ist.

16. Verfahren zum Fördern von festen Brennstoffen, insbesondere Pellets, aus einem Vorratsbehälter zu einer Brennkammer, wobei die Brennstoffe über eine Förderleitung angesaugt und danach in Richtung Brennkammer weitergeleitet werden, **dadurch gekennzeichnet, dass** die Menge der zur Brennkammer weitergeleiteten Brennstoffe mittels eines Sensors (14) erfasst und die Förderung der Brennstoffe in Abhängigkeit der erfassten Brennstoffmenge geregelt wird.

17. Förderverfahren nach Anspruch 16, **dadurch gekennzeichnet, dass** die Anzahl der einzelnen Förderschritte geregelt wird.

18. Förderverfahren nach Anspruch 16, **dadurch gekennzeichnet, dass** die Dauer der einzelnen Förderschritte geregelt wird.

19. Förderverfahren nach einem der Ansprüche 16 bis 18, **dadurch gekennzeichnet, dass** die Förderung der Brennstoffe nur bei abgebrannter Brennkammer erfolgt.

20. Förderverfahren nach einem der Ansprüche 16 bis 19, **dadurch gekennzeichnet, dass** die Brennkammer nach erfolgter Brennstoffförderung automatisch gezündet wird.

## Claims

1. A device for conveying solid fuels, particularly pellets (2), from a reservoir (3) to a combustion chamber (4) via a conveyor line (5), wherein a closure (9) arranged in a connection piece (7) surrounding the mouth of the conveyor line (5) is provided between the mouth (6) of the conveyor line (5) and the combustion chamber (4), and, furthermore, a device (10, 11) for generating a negative pressure on the mouth (6) of the conveyor line (5), which is connected with a control unit (15), is provided, **characterized in that** the closure (9) is connected with a drive (12, 13), and that, furthermore, a sensor (14) for detecting the amount of fuel, particularly pellets (2), conveyed to the combustion chamber (4) is provided, said drive (12, 13) and said sensor (14) being connected with the control unit (15).

2. A conveying device according to claim 1, **characterized in that** the closure (9), the drive (12, 13) and the sensor (14) are arranged in the connection piece.

3. A conveying device according to claim 1 or 2, **characterized in that** the connection piece (7) has a circular cross section.

4. A conveying device according to any one of claims 1 to 3, **characterized in that** the closure (9) is formed by a flap.

5. A conveying device according to claim 4, **characterized in that** the flap (9) is funnel-shaped, or a funnel (16) is arranged above the flap (9).

6. A conveying device according to claim 4 or 5, **characterized in that** the flap (9) is provided with a seal, preferably a rubber seal.

7. A conveying device according to any one of claims 4 to 6, **characterized in that** the drive (12, 13) is formed by a motor (12) and a lifting rod system (13).

8. A conveying device according to any one of claims 1 to 7, **characterized in that** the control unit (15) is formed by a microprocessor.

9. A conveying device according to any one of claims 1 to 8, **characterized in that** the sensor (14) is formed by a capacitive sensor.

10. A conveying device according to any one of claims 1 to 8, **characterized in that** the sensor (14) is formed by an ultrasonic sensor.

11. A conveying device according to any one of claims 1 to 8, **characterized in that** the sensor (14) is formed by an optical sensor.

12. A conveying device according to any one of claims 1 to 8, **characterized in that** the sensor (14) is formed by a inductive sensor.

13. A conveying device according to any one of claims 1 to 12, **characterized in that** a time switch unit is connected with the control unit (15), or a voltage supply unit for the control unit (15).

14. A conveying device according to any one of claims 1 to 13, **characterized in that** the device (10, 11) for generating a negative pressure on the mouth (6) of the conveyor line (5) is formed by a suction line (10) and a suction device, preferably a suction turbine (11), arranged thereon.

15. A conveying device according to any one of claims 1 to 14, **characterized in that** a conveying device, preferably a worm conveyor (17), is arranged in the reservoir (3) and connected with the control unit (15).

16. A method for conveying solid fuels, particularly pellets, from a reservoir to a combustion chamber, wherein the fuels are sucked in via a conveyor line and subsequently conveyed towards the combustion chamber, **characterized in that** the amount of fuels conveyed to the combustion chamber is detected by a sensor (14), and the conveyance of the fuels is controlled as a function of the detected amount of fuels.

17. A conveying method according to claim 16, **characterized in that** the number of the individual conveying steps is controlled.

18. A conveying method according to claim 16, **characterized in that** the duration of the individual conveying steps is controlled.

19. A conveying method according to any one of claims 16 to 18, **characterized in that** the conveyance of the fuels is only effected with the combustion chamber burned down.

20. A conveying method according to any one of claims 16 to 19, **characterized in that** the combustion chamber is automatically ignited upon completion of the fuel conveyance.

## Revendications

1. Dispositif pour transporter des combustibles solides, en particulier des pellets (2), d'un réservoir de stockage (3) via une conduite de transport (5) à une chambre de combustion (4), dans lequel il est prévu, entre la bouche (6) de la conduite de transport (5) et la chambre de combustion (4), une fermeture (9) agencée dans une pièce de raccordement (7) entourant la bouche de la conduite de transport (5) et encore un dispositif (10, 11) connecté à une unité de commande (15) pour générer une dépression au niveau de la bouche (6) de la conduite de transport (5), **caractérisé en ce que** la fermeture (9) est raccordée à un entraînement (12, 13) et **en ce qu'**il est prévu également un capteur (14) pour enregistrer la quantité de combustible, en particulier de pellets (2), transmise à la chambre de combustion (4), l'entraînement (12, 13) et le capteur (14) étant connectés à l'unité de commande (15).

2. Dispositif de transport selon la revendication 1, **caractérisé en ce que** la fermeture (9), l'entraînement (12, 13) et le capteur (14) sont agencés dans la pièce de raccordement.

3. Dispositif de transport selon la revendication 1 ou 2, **caractérisé en ce que** la pièce de raccordement (7) présente une section transversale circulaire.

4. Dispositif de transport selon l'une quelconque des revendications 1 à 3, **caractérisé en ce que** la fermeture (9) est formée par un volet.

5. Dispositif de transport selon la revendication 4, **caractérisé en ce que** le volet (9) est conformé en entonnoir ou un entonnoir (16) est agencé sur le volet (9).

6. Dispositif de transport selon la revendication 4 ou 5, **caractérisé en ce que** le volet (9) est équipé d'un joint d'étanchéité, de préférence d'un joint d'étanchéité en caoutchouc.

7. Dispositif de transport selon l'une quelconque des revendications 4 à 6, **caractérisé en ce que** l'entraînement (12, 13) est formé par un moteur (12) et une tringlerie de levage (13).

8. Dispositif de transport selon l'une quelconque des revendications 1 à 7, **caractérisé en ce que** l'unité de commande (15) est formée par un microprocesseur.

9. Dispositif de transport selon l'une quelconque des revendications 1 à 8, **caractérisé en ce que** le capteur (14) est formé par une sonde capacitive.

10. Dispositif de transport selon l'une quelconque des revendications 1 à 8, **caractérisé en ce que** le capteur (14) est formé par une sonde à ultrasons.

11. Dispositif de transport selon l'une quelconque des revendications 1 à 8, **caractérisé en ce que** le capteur (14) est formé par un capteur optique.

12. Dispositif de transport selon l'une quelconque des revendications 1 à 8, **caractérisé en ce que** le capteur (14) est formé par une sonde inductive.

13. Dispositif de transport selon l'une quelconque des revendications 1 à 12, **caractérisé en ce qu'**une unité de synchronisation est connectée à l'unité de commande (15) ou à une unité d'alimentation en tension pour l'unité de commande (15).

14. Dispositif de transport selon l'une quelconque des revendications 1 à 13, **caractérisé en ce que** le dispositif (10, 11) destiné à générer une dépression au niveau de la bouche (6) de la conduite de transport (5) est formé par une conduite d'aspiration (10) et un dispositif d'aspiration qui y est agencé, de préférence une turbine d'aspiration (11).

15. Dispositif de transport selon l'une quelconque des revendications 1 à 14, **caractérisé en ce que** l'on aménage, dans le réservoir de stockage (3), un dispositif de transport, de préférence une vis transporteuse sans fin (17), qui est raccordée à l'unité de commande (15).

16. Procédé pour transporter des combustibles solides, en particulier des pellets, d'un réservoir de stockage à une chambre de combustion, dans lequel les combustibles sont aspirés par une conduite de transport, puis transférés en direction de la chambre de combustion, **caractérisé en ce que** la quantité des combustibles transférés à la chambre de combustion est enregistrée au moyen d'un capteur (14) et **en ce que** le transport des combustibles est réglé en fonction de la quantité de combustibles enregistrée.

17. Procédé de transport selon la revendication 16, **caractérisé en ce que** le nombre des étapes de transport individuelles est réglé.

18. Procédé de transport selon la revendication 16, **caractérisé en ce que** la durée des étapes de transport individuelles est réglée.

19. Procédé de transport selon l'une quelconque des revendications 16 à 18, **caractérisé en ce que** le transport des combustibles ne se fait que lorsque le contenu de la chambre de combustion est épuisé.

20. Procédé de transport selon l'une quelconque des revendications 16 à 19, **caractérisé en ce que** la chambre de combustion est automatiquement allumée, une fois le transport de combustibles effectué.
